# DEMANDE DE BREVET EUROPEEN

(11) **EP 4 261 424 A1**
(43) Date de publication de la demande: **18.10.2023**
(21) Numéro de dépôt: 23163565.7
(22) Date de dépôt: 22.03.2023
(51) Int. Cl.: F16B 21/02, B60R 13/02, F16B 5/12, F16B 1/00

(54) **PARTIE AMOVIBLE ET BASE D'UN SYSTEME DE FIXATION D'UN SUPPORT POUR ACCESSOIRE DE VEHICULE AUTOMOBILE**

(30) Priorité: 11.04.2022 FR 2203281
(71) Demandeur: Renault s.a.s, 92100 Boulogne Billancourt (FR)
(72) Inventeur: SCHLEUNIGER, Mathias, 78280 GUYANCOURT (FR)

(57) **Abrégé**

L'invention concerne un système de fixation (1) de support d'accessoire pour un véhicule automobile, comprenant une base (10) destinée à être intégrée au véhicule et une partie amovible (20) présentant un support d'accessoire.

La base (10) et la partie amovible (20) comportent chacun des aimants (103, 203) participant à la fixation des deux pièces et assurant un verrouillage semi-automatique de la partie amovible sur la base en provoquant une rotation de la partie amovible par rapport à la base jusqu'à une mise en prise d'éléments d'accrochage.

## Description

L'invention a pour objet une partie amovible et une base faisant partie d'un système de fixation d'un support pour un accessoire dans un véhicule automobile, ainsi que le système de fixation en lui-même.

Il existe des systèmes de fixation sur tableau de bord de véhicule automobile permettant le maintien d'un téléphone, d'une tablette ou autre. Ces systèmes de fixation sont souvent fixés par un adhésif ou encore par un système de ventouse. Ces systèmes ne sont toutefois pas toujours très performants ou ne peuvent être ôtés. En outre, leur montage n'est pas toujours aisé et nécessite en général une surface plane. Par ailleurs, le système de fixation reste en place souvent en permanence, même lorsque le support n'est pas utilisé, de sorte qu'il peut être détérioré.

L'invention vise à surmonter tout ou partie des inconvénients précités.

A cet effet, il est proposé une partie amovible et une base conformées pour coopérer et former un système de fixation pour un support d'accessoire.

Un premier objet concerne ainsi une partie amovible d'un système de fixation de support d'accessoire destinée à coopérer en fixation avec une base du système de fixation. Selon l'invention, la partie amovible comprend un corps présentant un support d'accessoire et une paroi pourvue d'un embout de fixation s'étendant suivant une direction d'insertion et apte à être reçu à l'intérieur de la base.

En outre, selon l'invention :
- le corps est équipé d'au moins deux aimants de polarité définie positionnés autour de l'embout, dans un plan perpendiculaire à la direction d'insertion, notamment à proximité immédiate de la paroi du corps pourvue de l'embout,
- l'embout est pourvu d'au moins un élément d'accrochage, cet élément d'accrochage étant situé à distance d'une extrémité libre de l'embout suivant la direction d'insertion, faisant saillie d'une paroi latérale de l'embout perpendiculairement à la direction d'insertion et s'étendant sur une partie de la périphérie de l'embout,
- l'embout est pourvu d'au moins un élément de guidage en translation s'étendant suivant la direction d'insertion depuis l'extrémité libre de l'embout jusqu'à la position de l'au moins un élément d'accrochage, cet élément de guidage étant apte à coopérer avec un élément de guidage correspondant de la base, l'embout étant maintenu dans une première position angulaire d'insertion ou d'extraction par rapport à la direction d'insertion.

En prévoyant des aimants sur la partie amovible et sur la base tel que décrit ci-après, une force magnétique d'attraction peut être créée entre la base et la partie amovible, cette force étant d'autant plus forte que les aimants sont alignés suivant la direction d'insertion ou sensiblement alignés. Une telle force facilite ainsi l'insertion de l'embout à l'intérieur du logement et améliore la fixation de la partie amovible à la base, en réduisant notamment les risques de vibration de la partie amovible par rapport à la base.

En outre, en maintenant l'embout dans une première position angulaire d'insertion ou d'extraction par rapport à la direction d'insertion, il est possible de créer une composant tangentielle de la force magnétique existant entre les aimants de la partie amovible et de la base lorsque dans cette première position angulaire, les aimants de la partie amovible et de la base ne sont pas exactement alignés selon la direction d'insertion, à savoir ne sont pas situés en regard les uns des autres suivant cette direction mais sont décalés angulairement. Ceci permet notamment de réaliser un verrouillage semi-automatique de la partie amovible sur la base.

Cet élément de guidage peut être une simple saillie ou rainure réalisée sur la paroi latérale de l'embout apte à coopérer avec une rainure ou saillie correspondante du logement de la base et maintenant l'embout dans la première position angulaire par rapport à la base. D'autres modes de réalisation sont cependant envisageables.

Ainsi, avantageusement, une extrémité libre de l'embout peut présenter au moins une surface inclinée s'écartant de la paroi latérale de l'embout depuis ladite extrémité libre jusqu'à une surface d'accrochage s'étendant perpendiculairement à la direction d'insertion, l'au moins une surface inclinée définissant un élément de guidage, ladite surface d'accrochage définissant un élément d'accrochage. Cet agencement simple et facile à réaliser permet de positionner facilement l'embout dans la première position angulaire par glissement de l'au moins une surface inclinée sur une surface de guidage correspondante de la base lors de l'insertion de l'embout à l'intérieur de la base, tel que décrit plus bas.

Avantageusement, chaque aimant de la partie amovible peut présenter une face externe dirigée vers l'extérieur du corps, la polarité des faces externes d'aimants adjacents étant inversée. Ceci permet de réaliser un détrompage lors de la fixation de la partie amovible, les aimants de la partie amovible et de la base se repoussant si des aimants de polarité opposée ne sont pas en regard. Avantageusement, le corps peut comprendre un anneau en matériau ferromagnétique s'étendant dans un plan perpendiculaire à la direction d'insertion et disposé à proximité immédiate desdits au moins deux aimants. Ceci peut permettre d'augmenter le magnétisme des aimants et la force d'attraction qu'ils exercent les uns sur les autres.

Avantageusement, le support d'accessoire peut être relié au corps par des éléments de fixation fusibles en cas de choc. Ceci permet de préserver l'embout de la partie amovible et la base en cas de choc et d'éviter ainsi d'avoir à remplacer la base et le corps de la partie amovible, seul le support d'accessoire devant être remplacé. De préférence, seuls les éléments de fixation solidaires du support d'accessoire peuvent être fusibles. Avantageusement, la paroi latérale de l'embout peut être pourvue de bornes de contact électrique reliées électriquement à des bornes du support d'accessoire. Ceci permet de prévoir au niveau du support d'accessoire une prise d'alimentation électrique, par exemple de type USB ou autre, pour alimenter un accessoire de type téléphone ou autre.

Un autre objet de l'invention concerne une base d'un système de fixation de support d'accessoire destinée à coopérer en fixation avec la partie amovible selon l'invention. Cette base comprend :
- un corps présentant une paroi externe pourvue d'une ouverture, destiné à être intégré à un panneau d'habillage de véhicule automobile,
- un logement débouchant sur la paroi externe du corps par l'ouverture et apte à recevoir par cette ouverture l'embout de la partie amovible dudit système de fixation suivant sa direction d'insertion.

En outre, selon l'invention :
- le logement est pourvu d'au moins un élément d'accrochage, cet élément d'accrochage étant situé à distance de l'ouverture du logement suivant la direction d'insertion, faisant saillie d'une paroi latérale du logement perpendiculairement à la direction d'insertion vers l'extérieur du logement et s'étendant sur une partie de la périphérie du logement, et cet élément d'accrochage est apte à coopérer avec l'au moins un élément d'accrochage de la partie amovible lorsque l'embout est inséré dans le logement dans une deuxième position angulaire de fixation distincte de la première position angulaire,
- le logement est pourvu d'au moins un élément de guidage en translation, celui-ci s'étendant suivant la direction d'insertion depuis l'ouverture du logement jusqu'à la position de l'au moins un élément d'accrochage et étant apte à coopérer avec l'au moins un élément de guidage de la partie amovible, l'embout étant maintenu dans la première position angulaire d'insertion ou d'extraction,
- le corps est équipé d'au moins deux aimants positionnés autour du logement à proximité de son ouverture dans un plan perpendiculaire à la direction d'insertion, ces aimants étant alignés suivant la direction d'insertion avec les aimants de la partie amovible lorsque l'embout est dans la deuxième position angulaire de fixation et présentant une polarité opposée à la polarité de l'aimant de l'embout avec lesquels ils sont alignés.

On comprend ainsi que par cet agencement, les éléments de guidage en translation interdisent tout mouvement de rotation de l'embout par rapport à la base lorsqu'ils coopèrent, ce qui permet de maintenir l'embout et le corps de la partie amovible dans une position angulaire spécifique par rapport à la base susceptible de créer la force magnétique tangentielle mentionnée plus haut et due à un désalignement des aimants. Par ailleurs, lorsque l'embout a dépassé cet élément de guidage en translation, il est libre de tourner autour de la direction d'insertion par rapport à la base, et est ramené par une composante tangentielle de la force magnétique dans la deuxième position angulaire dans laquelle les aimants des deux parties sont alignés ou sensiblement alignés. Avantageusement, la base peut comporter autant d'aimants que la partie amovible pour une meilleure attraction magnétique de la partie amovible. Avantageusement, le corps de la base peut comporter un doigt monté mobile en translation à l'intérieur du logement entre une position sortie dans laquelle une de ses extrémités obture l'ouverture du logement et une position rétractée dans laquelle cette extrémité est située à distance de cette ouverture, cette distance est par exemple égale à la dimension de l'embout suivant la direction d'insertion. En outre, un ressort de rappel est monté entre le doigt et le logement de manière à exercer sur le doigt une force le maintenant dans sa position sortie. Ceci permet d'obturer l'ouverture lorsque la partie amovible n'est pas montée sur la base, évitant la pénétration de salissures ou de corps étrangers à l'intérieur du logement et offrant un aspect visuel plus attrayant. En particulier, pour un meilleur rendu visuel, dans sa position de sortie, le doigt peut présenter une face s'étendant dans la continuité et affleurant avec la paroi externe de la base entourant l'ouverture du logement.

Quel que soit le mode de réalisation, la base peut en outre présenter au moins une des caractéristiques suivantes :
- chaque aimant peut présenter une face externe dirigée vers l'extérieur du corps et la polarité des faces externes d'aimants adjacents peut être inversée, pour permettre un détrompage lors du positionnement de la partie amovible en regard de la base ;
- le corps peut comprendre un anneau en matériau ferromagnétique s'étendant dans un plan perpendiculaire à la direction d'insertion et disposé à proximité immédiate desdits au moins deux aimants, afin d'améliorer le magnétisme des aimants ;
- le logement peut être pourvu de bornes de contact électrique destinées à coopérer avec des bornes correspondantes de la partie amovible lorsque l'embout est dans la deuxième position angulaire de fixation, permettant ainsi une alimentation électrique d'un accessoire.

L'invention a également pour objet un système de fixation comprenant une partie amovible selon l'invention et une base selon l'invention.

La fixation de la partie amovible sur la base est notamment réalisée de la manière suivante : l'embout est inséré à l'intérieur de la base suivant la direction d'insertion en étant positionné par rapport à la base selon la première position angulaire d'insertion/extraction par coopération des éléments de guidage, l'attraction des aimants favorisant l'insertion de l'embout dans la base, par exemple jusqu'à ce que les corps de la base et de la partie amovible soient en contact et/ou jusqu'à ce que les éléments de guidage ne coopèrent plus. Lorsque les éléments de guidage ne coopèrent plus, la rotation de l'embout par rapport à la base est à nouveau possible et la composante tangentielle de la force d'attraction des aimants provoque la rotation de l'embout jusqu'à la deuxième position angulaire de fixation.

L'invention concerne également un véhicule automobile comprenant au moins une base d'un système de fixation selon l'invention, ladite base étant intégrée à un panneau d'habillage du véhicule choisi parmi un panneau de garniture et la planche de bord du véhicule. Ce panneau de garniture peut faire partie de l'habitacle ou du coffre du véhicule.

Avantageusement, la paroi externe de la base peut affleurer une paroi du panneau d'habillage.

L'invention est maintenant décrite en référence aux dessins annexés, non limitatifs, dans lesquels :

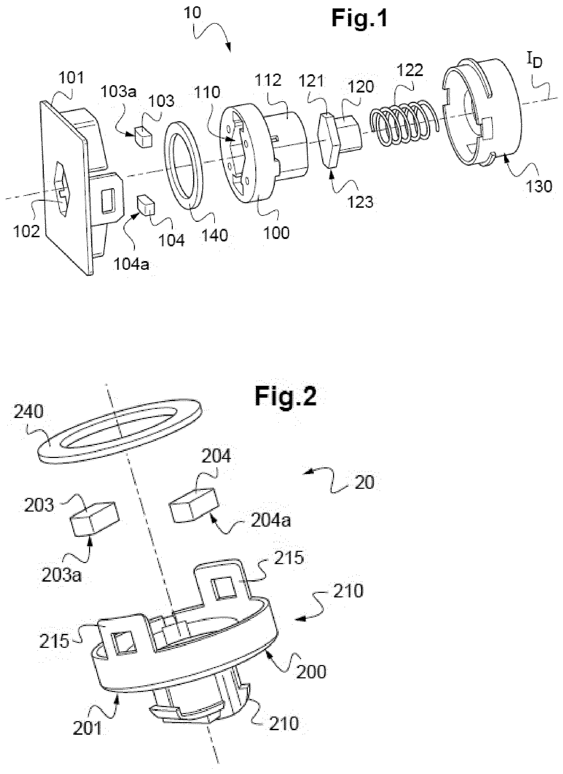

La [Fig. 1] représente une vue éclatée d'une base d'un système de fixation selon un mode de réalisation de l'invention.
La [Fig. 2] représente une vue éclatée d'une partie amovible d'un système de fixation selon un mode de réalisation de l'invention.
La [Fig. 3] représente une vue en perspective d'une partie amovible d'un système de fixation selon un mode de réalisation de l'invention.
Les [Fig. 4] et [Fig. 5] représentent schématiquement en coupe une base et une partie amovible d'un système de fixation selon l'invention avant et après fixation respectivement.
Les [Fig. 6] et [Fig. 7] représentent partiellement vue de dessus la base et la partie amovible d'un système de fixation selon l'invention juste avant et juste après respectivement l'insertion de l'embout dans le logement.
La [Fig. 8] représente partiellement vue de côté la base et la partie amovible d'un système de fixation selon l'invention juste après l'insertion de l'embout dans le logement.

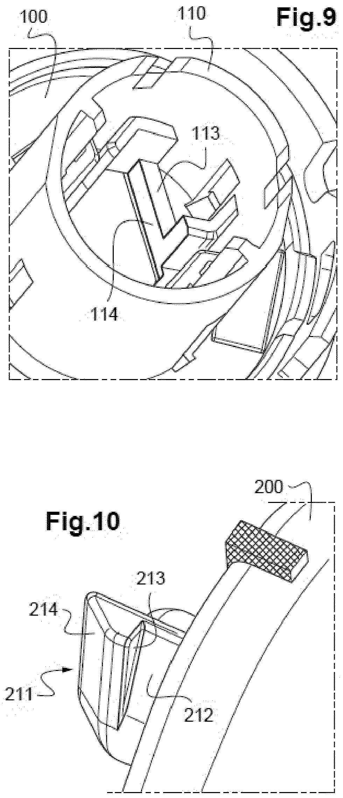

Les [Fig. 9] et [Fig. 10] sont des représentations partielles en perspective de la base et de la partie amovible d'un système de fixation selon l'invention.
Les [Fig. 11] et [Fig. 12] sont des vues suivant la direction d'insertion d'une base et d'une partie amovible d'un système de fixation selon l'invention.

Le système de fixation 1 représenté sur les figures comprend une base 10 destinée à être intégrée à un panneau d'habillage 2 de véhicule automobile et une partie amovible 20 apte à servir de support à un accessoire, cette partie amovible 20 étant conformée pour être fixée de manière réversible à la base 10.

La base 10 est ainsi pourvue d'un logement 110 recevant un embout 210 de la partie amovible 20, cette dernière étant en outre pourvue d'un support d'accessoire 220.

Dans l'exemple représenté, la partie amovible 20 comprend un corps 200 dont une paroi 201 supporte l'embout 210. Dans l'exemple, l'embout s'étend dans une direction ici perpendiculaire à la paroi 201, cette direction formant la direction d'insertion I_{D}.

Le corps 200 de la partie amovible est équipé de deux aimants 203, 204 de polarité définie et positionnés autour de l'embout 210 dans un plan perpendiculaire à la direction d'insertion. Ces aimants 203, 204 peuvent avantageusement être montés à l'intérieur du corps, d'un côté de la paroi 201 opposé à l'embout 210. Les aimants 203, 204 sont de préférence assemblés au corps par collage, emboitement dans un logement dimensionné à cet effet, ou autre.

Dans l'exemple, seuls deux aimants 203, 204 sont prévus, ici disposés symétriquement par rapport à l'embout 210. L'invention n'est toutefois pas limitée à un nombre d'aimants particulier et l'on pourrait prévoir trois ou quatre aimants, voire plus en fonction des dimensions du corps et des aimants, de préférence répartis régulièrement autour de l'embout. Une répartition régulière des aimants sur la périphérie de l'embout permet en effet d'obtenir une force d'attraction magnétique répartie sur la périphérie et d'éviter que la partie amovible ne se rapproche de sa base dans une position inclinée par rapport à la direction d'insertion.

L'embout 210 présente une extrémité libre 211 et une paroi latérale 212. Sa forme est ici généralement prismatique mais l'invention n'est pas limitée à une forme particulière et toute autre forme est envisageable.

L'embout 210 est pourvu d'au moins un élément d'accrochage 213. Dans l'exemple, deux éléments d'accrochage 213 sont prévus, ici situés de part et d'autre de l'embout. Chaque élément d'accrochage 213 est situé à distance de l'extrémité libre 211 de l'embout suivant la direction d'insertion, fait saillie de la face latérale 212 de l'embout perpendiculairement à la direction d'insertion et s'étend sur une partie de la périphérie de l'embout.

L'embout est également pourvu d'au moins un élément de guidage en translation 214. Dans l'exemple, deux éléments de guidage 214 sont prévus, ici situés de part et d'autre de l'embout. Chaque élément de guidage 214 s'étend suivant la direction d'insertion depuis l'extrémité libre 211 de l'embout jusqu'à la position des éléments d'accrochage 213. En outre, chaque élément de guidage est apte à coopérer avec un élément de guidage 114 correspondant de la base, l'embout étant maintenu dans une première position angulaire d'insertion/d'extraction par rapport à la direction d'insertion.

Dans l'exemple représenté, chaque élément d'accrochage est défini par une surface d'accrochage 213 s'étendant perpendiculairement à la direction d'insertion et chaque élément de guidage est défini par une surface inclinée 214 s'écartant de la paroi latérale 212 de l'embout depuis son extrémité libre 211 jusqu'à l'une des surfaces d'accrochage 213. Cette surface inclinée 214 est ici une surface plane. L'extrémité libre 211 de l'embout présente ainsi des parties chanfreinées qui vont guider l'embout lors de son introduction à l'intérieur du logement.

Dans l'exemple, le corps 200 est assemblé au support d'accessoire 220 par des clips 215 venant en prise avec des saillies 225 correspondantes du support d'accessoire. Ces éléments de fixation (ici les clips 215 et saillies 225) peuvent avantageusement être fusibles en cas de choc permettant le détachement du support d'accessoire. A cet effet, les saillies 225 peuvent par exemple présenter une zone de moindre épaisseur formant une zone fusible. En variante, on pourrait également envisager l'emboîtement de pions solidaires du support d'accessoire dans des orifices correspondants du corps 200, ces pions présentant une zone de faiblesse fusible. Quel que soit le mode de réalisation, les éléments de fixation fusibles pourront être calibrés en fonction d'exigences réglementaires pour des chocs particuliers.

Enfin, dans l'exemple représenté, la paroi latérale 212 de l'embout est pourvue de bornes de contact électrique 216 reliées électriquement à des bornes du support d'accessoire (non représentées).

Cette partie amovible 20 est conformée pour coopérer en fixation avec la base 10, laquelle présente un corps 100 présentant une paroi externe 101 pourvue d'une ouverture 102. La base 10 présente également un logement 110, notamment ménagé dans le corps, débouchant sur la paroi externe 101 du corps 100 par l'ouverture 102.

Le logement 110 est apte à recevoir par cette ouverture 102 l'embout 210 de la partie amovible du système de fixation suivant la direction d'insertion I_{D}. Typiquement, le logement 110 présente une forme et des dimensions permettant l'insertion de l'embout 210. Cette forme et ces dimensions seront donc choisies en fonction de la forme et des dimensions de l'embout 210 de la partie amovible. Le logement 110 et l'embout 210 peuvent par exemple présenter des formes généralement complémentaires.

Le logement 110 présente typiquement une paroi latérale 112 s'étendant depuis l'ouverture 102. Sa forme est ici généralement prismatique mais l'invention n'est pas limitée par une forme particulière et toute autre forme est envisageable pourvu qu'elle permette l'insertion de l'embout.

Le logement 110 est pourvu d'au moins un élément d'accrochage 113. Dans l'exemple, deux éléments d'accrochage 113 sont prévus, ici situés de part et d'autre du logement. Chaque élément d'accrochage 113 est situé à distance de l'ouverture 102 suivant la direction d'insertion. Typiquement, quel que soit le mode de réalisation, on pourra choisir une distance égale ou sensiblement égale à la distance séparant la paroi 201 de la partie amovible et un élément d'accrochage 213 de l'embout. Dans ce cas, la paroi 201 de la partie amovible est en contact contre la paroi externe 101 de la base lorsque les éléments d'accrochage 113, 213 des deux parties sont en prise. On pourrait éventuellement choisir une distance plus faible, mais la fixation des deux pièces serait moins stable.

Chaque élément d'accrochage 113 fait saillie de la paroi latérale 112 du logement perpendiculairement à la direction d'insertion I_{D} vers l'extérieur du logement et s'étend sur une partie de la périphérie du logement.

Chaque élément d'accrochage 113 est en outre apte à coopérer avec un élément d'accrochage 213 correspondant de la partie amovible lorsque l'embout 210 est inséré dans le logement dans une deuxième position angulaire de fixation distincte de la première position angulaire. Dans l'exemple, ces éléments d'accrochage 113, 213 sont situés en regard les uns des autres suivant la direction d'insertion I_{D} lorsque l'embout est dans la deuxième position angulaire de fixation.

Le logement 110 est également pourvu d'au moins un élément de guidage en translation 114. Dans l'exemple, deux éléments de guidage 114 sont prévus, ici situés de part et d'autre du logement. Chaque élément de guidage 114 s'étend suivant la direction d'insertion I_{D} depuis l'ouverture 102 du logement jusqu'à la position de l'au moins un élément d'accrochage 113. Ces éléments de guidage 114 sont donc internes au logement.

En outre, chaque élément de guidage 114 est apte à coopérer avec un élément de guidage 214 correspondant de la partie amovible, l'embout 210 étant maintenu dans la première position angulaire d'insertion ou d'extraction. Cette coopération consiste par exemple en un contact glissant entre les éléments de guidage 114, 214.

Dans l'exemple représenté, chaque élément d'accrochage de la base 10 est défini par une surface d'accrochage 113 s'étendant perpendiculairement à la direction d'insertion et chaque élément de guidage de la base 10 est défini par une surface 114 parallèle à la direction d'insertion s'étendant depuis l'ouverture 102 jusqu'aux surfaces d'accrochage 113.

Enfin, le corps 100 de la base 10 est équipé de deux aimants 103, 104 positionnés autour du logement 110 à proximité de son ouverture 102 dans un plan perpendiculaire à la direction d'insertion. Ces aimants 103, 104 sont alignés suivant la direction d'insertion avec les aimants 103, 104 de la partie amovible lorsque l'embout est dans la deuxième position angulaire de fixation. En outre, ces aimants 103, 104 présentent une polarité opposée à la polarité de l'aimant avec lesquels ils sont alignés. Ainsi, dans l'exemple, les deux aimants 103, 104 sont disposés symétriquement par rapport au logement.

Afin de permettre l'obturation de l'ouverture 102 de la base lorsqu'elle n'est pas utilisée, on pourra prévoir un volet par exemple rabattable à l'intérieur du logement et revenant à sa position d'obturation lorsque l'embout n'est pas présent.

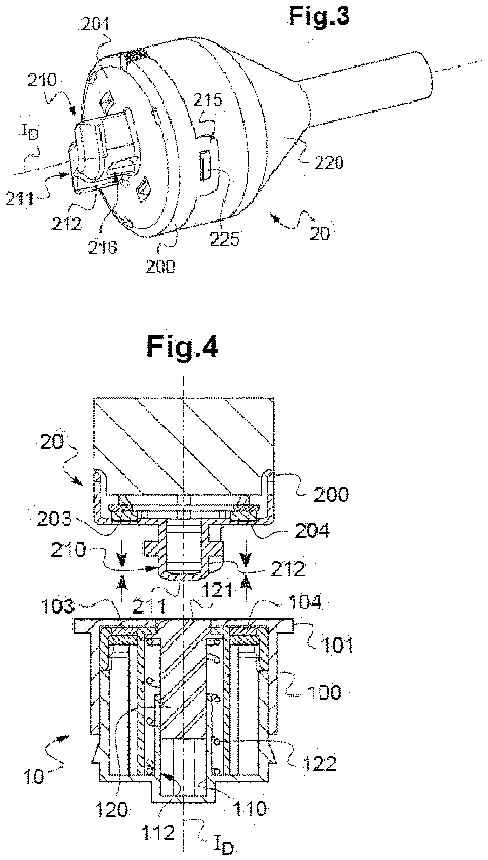

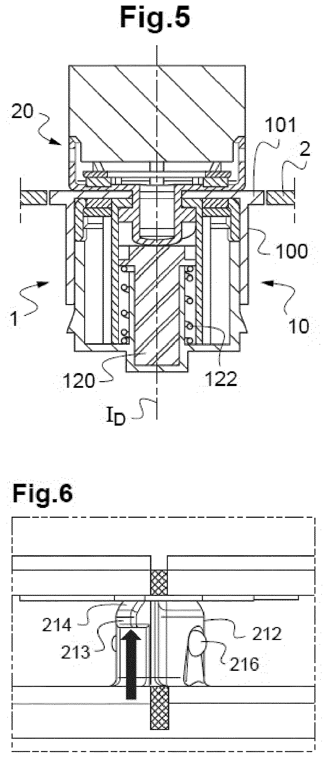

Dans le présent exemple, un doigt 120 monté mobile en translation à l'intérieur du logement 110 du corps entre une position sortie (fig. 4) dans laquelle une des extrémités 121 du doigt obture l'ouverture 102 du logement et une position rétractée (Fig. 5) dans laquelle cette extrémité 121 est située à distance de cette ouverture 102. Un ressort de rappel 122 monté entre le doigt 120 et le logement permet d'exercer sur le doigt une force le maintenant dans sa position sortie. Ce ressort de rappel 122 est par exemple monté autour du doigt 120 et prend appui d'un côté contre une collerette 123 du doigt située du côté de son extrémité 121, et de l'autre contre un boîtier 130 recevant le corps 100 et fermé par la paroi externe 101. La paroi externe 101 est ici assemblée au boîtier 130. En variante, cette paroi externe 101 pourrait toutefois être intégrée au corps 100.

Dans sa position de sortie, l'extrémité 121 du doigt présente ici une face s'étendant dans la continuité et affleurant avec la paroi externe 101 du corps entourant l'ouverture du logement, assurant un meilleur rendu visuel.

On notera que, dans cet exemple, pour la base 10 comme pour la partie amovible 20, les aimants 103, 104 ; 203, 204 sont positionnés de sorte qu'une face externe 103a, 104a ; 203a, 204a des aimants corresponde à un pôle de l'aimant, cette face externe 103a, 104a ; 203a, 204a s'étendant de préférence perpendiculairement à la direction d'insertion et étant dirigée en direction de l'autre partie du système de fixation i.e. la partie amovible et la base respectivement. La polarité des deux aimants d'une même partie du système de fixation peut être la même ou non. Dans ce dernier cas, la partie amovible ne peut être assemblée à la base que dans une seule position dans laquelle les aimants de polarité opposés sont alignés suivant la direction d'insertion.

La base 10 comme la partie amovible 20 peuvent chacune comprendre un anneau 140, 240 en matériau ferromagnétique s'étendant dans un plan perpendiculaire à la direction d'insertion et disposé à proximité immédiate des deux aimants de chaque partie. Cet anneau peut participer au maintien des aimants à l'intérieur du corps de la base ou de la partie amovible, notamment en maintenant les aimants contre le corps. On pourra par exemple utiliser un anneau en fer, cobalt, nickel.

Enfin, le logement 110 et l'embout 210 peuvent comprendre des bornes de contact électrique coopérant ensemble (i.e. en contact électrique), lorsque l'embout est dans la position angulaire de fixation.

Dans l'exemple, deux bornes disposées de part et d'autre du logement (à l'intérieur de celui-ci) et de l'embout (sur sa paroi latérale) respectivement sont prévues. Seules les bornes 216 de l'embout sont représentées sur les figures pour des raisons de clarté.

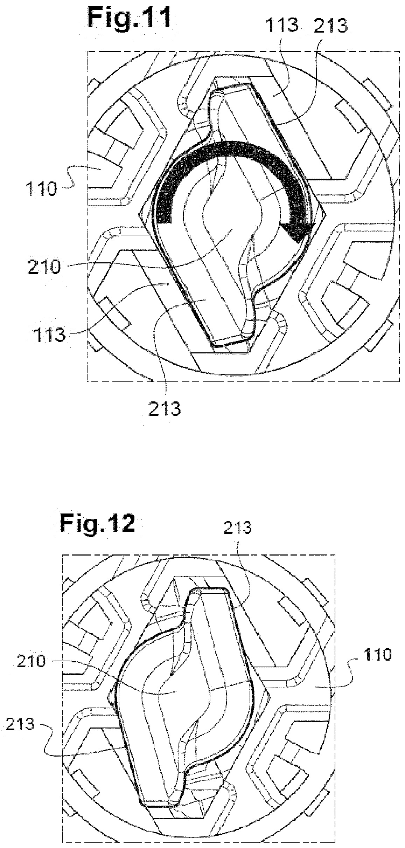

L'utilisation du système de fixation selon l'invention et les différentes positions relatives de la partie amovible 20 et de sa base 10 sont maintenant décrites en référence aux figures 4 à 8 et 11, 12.

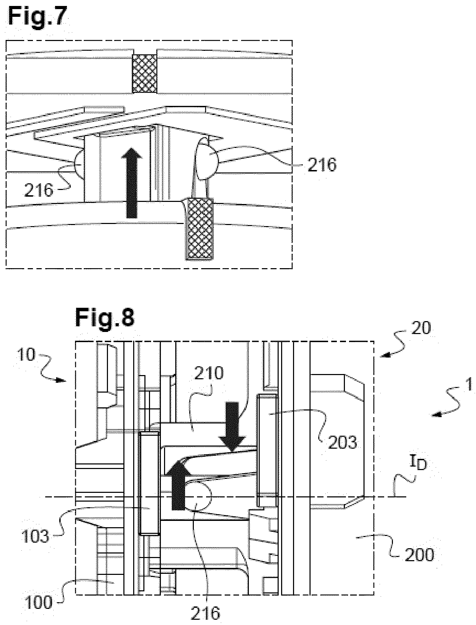

La partie amovible 20 est d'abord approchée de la base 10, l'embout 210 étant avancé en direction de l'ouverture 102 du logement de la base 10 suivant la direction d'insertion I_{D}, ou sensiblement suivant cette direction (i.e. avec une inclinaison pouvant aller jusqu'à 20°). Lorsque les pièces 10 et 20 sont suffisamment proches, par exemple à partir d'une distance de l'ordre de la longueur de l'embout, la partie amovible 20 est attirée magnétiquement vers la base 10 suivant la direction d'insertion (fig. 6). Si les aimants 103, 104 ; 203, 204 de chaque pièce présentent des polarités différentes, les aimants vont se repousser si la partie amovible n'est pas correctement orientée, il faut alors pivoter l'embout jusqu'à ce que les aimants s'attirent. Lorsque l'extrémité 121 de l'embout 120 entre en contact avec l'ouverture 102, les surfaces inclinées 214 de l'embout entrent en contact avec le bord de l'ouverture (extrémité des surfaces de guidage 114) et provoquent le pivotement de l'embout 210 (et donc de la partie amovible) par rapport à la base 10 autour de la direction d'insertion et l'alignement de l'embout dans cette direction d'insertion (fig. 7). Les aimants 103, 104 ; 203, 204 sont alors décalés angulairement suivant la direction d'insertion (fig. 8). Ainsi, la force magnétique d'attraction des aimants est transformée en un effort mécanique tangentiel qui crée un couple engendrant une rotation de la partie amovible jusqu'à la première position angulaire dite d'insertion /extraction, représentée figures 7, 8 et 11. Cette rotation de la partie amovible 20 désaligne angulairement les paires d'aimants, décomposant la force magnétique en une composante axiale (suivant la direction d'insertion) et une composante tangentielle (perpendiculaire à la direction d'insertion). L'embout 210 de la partie amovible est ensuite guidé en translation en direction de la base suivant la direction I_{D} par la composante axiale de la force magnétique jusqu'à une position dans laquelle les éléments de guidage 114, 214 du logement et de l'embout respectivement ne soient plus en prise (avantageusement, dans cette position, les parois 101, 201 sont en contact). La rotation de l'embout 210 par rapport à la base 10 redevient alors possible et l'embout 210 pivote de la première position angulaire à la deuxième position angulaire de fixation sous l'action de la composante tangentielle de la force magnétique, cette deuxième position angulaire correspondant à une position dans laquelle les aimants sont alignés ou sensiblement alignés (décalage angulaire inférieur à 5°) suivant la direction d'insertion (composante tangentielle nulle ou quasiment nulle de la force magnétique).

Lorsque la base 10 comporte un doigt 120 et un ressort de rappel 122, les aimants et/ou le ressort pourront avantageusement être choisis de sorte que la composante axiale de la force magnétique soit supérieure à la force de rappel du ressort, ceci afin de faciliter l'insertion et le verrouillage automatique de la partie amovible sur la base.

L'extraction de la partie amovible peut être réalisée de manière simple en pivotant la partie amovible dans la direction inverse (de la position angulaire de fixation à la position angulaire d'insertion/extraction) afin de dégager les surfaces d'accrochage 213 de l'embout des surfaces d'accrochage 113 du logement, puis extraction de l'embout en tirant ce dernier vers l'extérieur suivant la direction d'insertion I_{D}.

On notera que l'angle entre les premières et deuxième positions angulaires de l'embout peut être faible, par exemple de 8 à 20°, de préférence de 10 à 15°, bien que des angles différents soient envisageables. Notamment, dans la position angulaire d'insertion/extraction, les aimants peuvent se recouvrir en partiellement en projection dans un plan perpendiculaire à la direction d'insertion, tel que visible figure 8, ou non.

## Revendications

1. Partie amovible (20) d'un système de fixation (1) de support d'accessoire destinée à coopérer en fixation avec une base (10) du système de fixation, la partie amovible comprenant un corps (200) présentant un support d'accessoire (220) et une paroi (201) pourvue d'un embout (210) de fixation s'étendant suivant une direction d'insertion et apte à être reçu à l'intérieur de la base, et
- le corps (200) est équipé d'au moins deux aimants (203, 204) de polarité définie positionnés autour de l'embout (210), dans un plan perpendiculaire à la direction d'insertion,
- l'embout (210) est pourvu d'au moins un élément d'accrochage (213), cet élément d'accrochage étant situé à distance d'une extrémité libre (211) de l'embout suivant la direction d'insertion, faisant saillie d'une paroi latérale (212) de l'embout perpendiculairement à la direction d'insertion et s'étendant sur une partie de la périphérie de l'embout,
- l'embout (210) est pourvu d'au moins un élément de guidage en translation (214) s'étendant suivant la direction d'insertion depuis l'extrémité libre (211) de l'embout jusqu'à la position de l'au moins un élément d'accrochage, cet élément de guidage (214) étant apte à coopérer avec un élément de guidage (114) correspondant de la base, l'embout (210) étant maintenu dans une première position angulaire d'insertion ou d'extraction par rapport à la direction d'insertion.

2. Partie amovible (20) d'un système de fixation selon la revendication 1, **caractérisée en ce qu'**une extrémité libre (121) de l'embout présente au moins une surface inclinée (214) s'écartant de la paroi latérale (212) de l'embout depuis ladite extrémité libre (211) jusqu'à une surface d'accrochage (213) s'étendant perpendiculairement à la direction d'insertion, l'au moins une surface inclinée (214) définissant un élément de guidage, ladite surface d'accrochage (213) définissant un élément d'accrochage.

3. Partie amovible (20) d'un système de fixation selon la revendication 1 ou 2, **caractérisée en ce qu'**elle présente au moins une des caractéristiques suivantes :
(i) chaque aimant (203, 204) présente une face externe (203a, 203b) dirigée vers l'extérieur du corps, la polarité des faces externes d'aimants adjacents étant inversée,
(ii)le corps (200) comprend un anneau (240) en matériau ferromagnétique s'étendant dans un plan perpendiculaire à la direction d'insertion et disposé à proximité immédiate desdits au moins deux aimants.

4. Partie amovible (20) d'un système de fixation selon l'une quelconque des revendications 1 à 3, **caractérisée en ce que** le support d'accessoire (220) est relié au corps (200) par des éléments de fixation (225) fusibles en cas de choc.

5. Partie amovible (20) d'un système de fixation selon l'une quelconque des revendications 1 à 4, **caractérisée en ce que** la paroi latérale (212) de l'embout est pourvue de bornes de contact électrique (216) reliées électriquement à des bornes du support d'accessoire.

6. Base (10) d'un système de fixation de support d'accessoire destinée à coopérer en fixation avec une partie amovible (20) selon l'une quelconque des revendications 1 à 5, la base comprenant :
- un corps (100) présentant une paroi externe (101) pourvue d'une ouverture (102), destiné à être intégré à un panneau d'habillage (2) de véhicule automobile,
- un logement (110) débouchant sur la paroi externe (101) du corps par l'ouverture (102) et apte à recevoir par cette ouverture l'embout (210) de la partie amovible (20) dudit système de fixation suivant sa direction d'insertion, et
- le logement (110) est pourvu d'au moins un élément d'accrochage (113), cet élément d'accrochage étant situé à distance de l'ouverture (102) du logement suivant la direction d'insertion, faisant saillie d'une paroi latérale (112) du logement perpendiculairement à la direction d'insertion vers l'extérieur du logement et s'étendant sur une partie de la périphérie du logement, et cet élément d'accrochage (113) est apte à coopérer avec l'au moins un élément d'accrochage (213) de la partie amovible lorsque l'embout est inséré dans le logement dans une deuxième position angulaire de fixation distincte de la première position angulaire,
- le logement (110) est pourvu d'au moins un élément de guidage en translation (114), celui-ci s'étendant suivant la direction d'insertion depuis l'ouverture (102) du logement jusqu'à la position de l'au moins un élément d'accrochage (113) et étant apte à coopérer avec l'au moins un élément de guidage (214) de la partie amovible, l'embout (210) étant maintenu dans la première position angulaire d'insertion ou d'extraction,
- le corps (100) est équipé d'au moins deux aimants (103, 104) positionnés autour du logement (110) à proximité de son ouverture (102) dans un plan perpendiculaire à la direction d'insertion, ces aimants étant alignés suivant la direction d'insertion avec les aimants de la partie amovible lorsque l'embout est dans la deuxième position angulaire de fixation et présentant une polarité opposée à la polarité de l'aimant de l'embout avec lesquels ils sont alignés.

7. Base (10) d'un système de fixation selon la revendication 6, **caractérisée en ce que** le corps (100) comporte un doigt (120) monté mobile en translation à l'intérieur du logement (110) entre une position sortie dans laquelle une de ses extrémités (121) obture l'ouverture (102) du logement et une position rétractée dans laquelle cette extrémité (121) est située à distance de cette ouverture (102), un ressort de rappel 122) étant monté entre le doigt (120) et le logement (110) et exerçant sur le doigt une force le maintenant dans sa position sortie.

8. Base (10) d'un système de fixation selon l'une quelconque des revendications 6 ou 7, **caractérisée en ce qu'**elle présente au moins une des caractéristiques suivantes :
(i) chaque aimant (103, 104) présente une face externe (103a, 104a) dirigée vers l'extérieur du corps et **en ce que** la polarité des faces externes d'aimants adjacents est inversée,
(ii) le corps (100) comprend un anneau (140) en matériau ferromagnétique s'étendant dans un plan perpendiculaire à la direction d'insertion et disposé à proximité immédiate desdits au moins deux aimants.

9. Base (10) d'un système de fixation selon l'une quelconque des revendications 6 à 8, **caractérisée en ce que** le logement est pourvu de bornes de contact électrique destinées à coopérer avec des bornes correspondantes de la partie amovible lorsque l'embout est dans la deuxième position angulaire de fixation.

10. Système de fixation (1) comprenant une partie amovible (20) selon l'une quelconque des revendications 1 à 5 et une base (10) selon l'une quelconque des revendications 6 à 9.

11. Véhicule automobile comprenant au moins une base (10) d'un système de fixation selon l'une quelconque des revendications 6 à 9, ladite base (10) étant intégrée à un panneau d'habillage du véhicule choisi parmi un panneau de garniture et la planche de bord du véhicule.
